# FASCICULE DE BREVET EUROPEEN

(11) **EP 0 419 319 B1**
(45) Date de publication et mention de la délivrance du brevet: **07.12.1994**
(21) Numéro de dépôt: 90402490.8
(22) Date de dépôt: 11.09.1990
(51) Int. Cl.: F42C 19/08, F02K 9/95

(54) **Allumeur consumable pour moteur-fusée à propergol solide**
Brennbarer Anzünder für einen Raketenmotor mit festem Treibstoff
Combustible igniter for solid propellant rocket motor

(30) Priorité: 19.09.1989 FR 8912255
(43) Date de publication de la demande: 27.03.1991
(73) Titulaire: AGENCE SPATIALE EUROPEENNE, F-75738 Paris Cedex 15 (FR)
(72) Inventeur: Schoeyer, Herman Fedde Rein, Zoetermeer (NL); Borso, Guido, Colleferro (IT); Gibilisco, Salvatore, Rome (IT)
(74) Mandataire: Orès, Bernard

(56) Documents cités:
- US-A- 3 148 505
- US-A- 4 498 292
- US-A- 4 503 773
- US-A- 4 574 699
- US-A- 4 901 642

## Description

La présente invention est relative à un allumeur (ou dispositif d'allumage) pyrogène consumable pour moteur-fusée à agent propulsif (propergol) solide.

Un allumeur du type précité vise à :
- allumer le moteur-fusée à agent propulsif solide ;
- éviter toute surpression qui pourrait se manifester pendant l'allumage ou comme résultat de l'allumage ;
- allumer le propergol solide de façon à établir une augmentation uniforme de la pression, à savoir à éviter toute oscillation de pression ;
- compléter l'allumage en quelques dixièmes de seconde (normalement en un temps inférieur à 100 ms ou 200 ms au plus).

Les moteurs-fusées à agent propulsif solide sont allumés soit par un allumeur pyrotechnique soit par un allumeur pyrogène.

En ce qui concerne les allumeurs pyrotechniques, ils agissent dans le sens de diriger sur la surface du propergol solide du moteur-fusée des particules très chaudes qui, à leur tour, allument le propergol solide. La combustion de ce propergol solide doit effectuer la pressurisation du moteur-fusée.

En ce qui concerne les allumeurs pyrogènes, ceux-ci contiennent un "générateur de gaz". Le gaz très chaud provenant de ce "générateur" est destiné à élever la pression du moteur-fusée. En plus de l'émission de gaz très chaud, les allumeurs pyrogènes dirigent souvent, comme les allumeurs pyrotechniques, sur la surface du propergol solide du moteur-fusée des particules très chaudes pour améliorer l'allumage.

Une différence essentielle entre les allumeurs pyrotechniques et pyrogènes consiste en ce que ces derniers contiennent un ou plusieurs petits passages qui, dans la mesure où la pression dans le moteur-fusée est suffisamment basse, agissent comme des "cols soniques", de manière à séparer (au moins au début) le processus de combustion de l'allumeur du processus de combustion du moteur-fusée.

Tout allumeur comprend les composants suivants :
- une amorce (ou dispositif d'amorçage), qui peut être activée électriquement, mais qui peut être également activée mécaniquement ;
- un dispositif de propagation de la flamme d'amorçage de l'allumage (ou inflammateur) qui, dans sa réalisation la plus simple, consiste en un passage permettant au produit chaud provenant de la combustion ou de la détonation de l'amorce de se propager jusqu'à atteindre l'allumeur. Souvent ce dispositif de propagation peut comporter plusieurs composants et, dans beaucoup d'applications, on peut prévoir, pour des raisons de sécurité (à savoir, pour éviter un allumage dû à des erreurs d'intervention humaine), des moyens d'interruption de la propagation constitués par un boîtier de sécurité et d'Armement (SAFE/ARM).

La propagation de la flamme d'amorçage de l'allumage peut être obtenue par l'intermédiaire de cordeaux détonants, de cordeaux d'allumage à combustion rapide, d'amorces fonctionnant par onde de choc (TBI) ou tout moyen pyrotechnique analogue capable de permettre la propagation de la flamme d'amorçage de l'allumage. En outre, le dispositif de propagation peut également contenir un dispositif "d'amplification" pour allumer l'allumeur. Un tel dispositif "d'amplification" peut consister en une cartouche avec une charge (pyrotechnique), telle qu'un propergol pulvérulent, des pastilles de BKNO3, ou tout agent pyrotechnique analogue. L'allumeur comporte une enveloppe remplie complètement ou en partie soit d'un mélange pyrotechnique (il s'agit alors d'un allumeur pyrotechnique) soit de propergol (avec parfois un ou des mélanges pyrotechniques). L'enveloppe contient une ou plusieurs ouvertures à travers lesquelles les produits de combustion passent dans la cavité du moteur-fusée.

Dans l'art antérieur, l'enveloppe d'un allumeur est normalement réalisée en métal et, quelquefois, est intégrée à l'enveloppe du moteur-fusée ou de la tuyère d'échappement. Dans certains cas, l'allumeur est du type démontable.

Pendant la combustion du moteur-fusée, des fragments de l'enveloppe de l'allumeur sont parfois évacués à travers la tuyère d'échappement du moteur-fusée, endommageant ainsi cette tuyère ou d'autres parties du moteur-fusée. Pour éviter ceci, l'allumeur est protégé, dans la plupart des cas, par un isolant thermique. Il y a lieu de souligner le fait que, lorsque l'allumeur est intégré aux composants du moteur-fusée, ceci peut avoir comme conséquence l'augmentation de la masse du système parce que, dans le cas où une telle intégration est effectuée, il faut prendre des précautions spéciales en ce qui concerne la construction, la résistance, le transfert thermique et toute possible interaction indésirée entre l'allumeur "vide", -à savoir un allumeur dont la charge combustible a été complètement consumée, de manière à laisser une cavité (résonnante) vide-, et le moteur-fusée pendant le fonctionnement de celui-ci. En ce qui concerne l'allumeur démontable évoqué plus haut, ceci requiert des moyens spéciaux pour le fixer à l'intérieur du moteur-fusée, ce qui est difficile pour les moteurs-fusées modernes sphériques et impose, souvent, l'adoption de constructions spéciales pour obtenir une fermeture étanche au gaz. Des mesures doivent être prises aussi pour éviter toute interaction entre l'allumeur "vide" précité et le moteur-fusée pendant le fonctionnement de celui-ci.

Les allumeurs pyrotechniques actuels comportent une enveloppe métallique (parfois isolée thermiquement) contenant un mélange pyrotechnique. Cette enveloppe métallique contient un ou plusieurs passages à travers lesquels des particules très chaudes sont diri- gées vers la surface du propergol à allumer.

En ce qui concerne l'allumeur pyrogène, celui-ci est particulièrement adapté, en raison de ses propriétés, aux moteurs-fusées ayant un petit volume libre initial ainsi qu'une géométrie cylindrique et un propergol à combustion rapide, tel qu'on trouve souvent dans les applications militaires. L'allumeur pyrogène est en outre particulièrement adapté pour être monté dans la tête (ou extrémité frontale) du moteur-fusée, parce que le propergol allumé à proximité de l'allumeur peut, en raison de la propagation de la flamme, allumer la partie restante du propergol. La plupart des allumeurs pyrogènes sont démontables et vissés dans l'extrémité frontale du moteur-fusée.
Etant donné que, la plupart du temps, on doit empêcher que les allumeurs pyrogènes soient éjectés à travers la tuyère d'échappement, ils sont d'une construction lourde, ce qui entraîne par conséquent une augmentation de la masse du système dans son ensemble. Les allumeurs pyrogènes peuvent être intégrés dans la partie submergée (à savoir, dans la partie qui fait saillie dans la cavité du moteur-fusée) de la tuyère d'échappement (comme, par exemple, pour le satellite italien IRIS), mais peuvent également être montés dans l'extrémité frontale du moteur-fusée (comme, par exemple, pour le moteur apogée géostationnaire européen, MAGE, qui est un moteur apogée amplificateur, cylindrique et de grandes dimensions, développé pour des satellites européens). Dans chaque cas, une construction spéciale doit être prévue pour monter ou intégrer l'allumeur et il faut prendre des précautions pour qu'aucun "point chaud" inacceptable n'existe, l'adoption de ces précautions entraînant également une augmentation de la masse du système. Dans le cas où l'allumeur pyrogène (et parfois aussi l'allumeur pyrotechnique) est évacué à travers la tuyère d'échappement, après avoir allumé le moteur-fusée, des précautions spéciales doivent en outre être prises pour éviter le blocage temporaire de la tuyère d'échappement et/ou des dommages à cette tuyère. De plus, d'autres précautions doivent être prises pour que les parties métalliques n'endommagent pas la surface de combustion du propergol solide.

Les allumeurs pyrogènes et pyrotechniques du type intégré à des composants du moteur-fusée ou montés séparément dans le moteur-fusée, sont systématiquement utilisés dans les moteurs-fusées destinés aux applications militaires et spatiales, bien que pour ces dernières et pour les moteurs-fusées modernes il existe une préférence marquée pour les allumeurs pyrogènes.

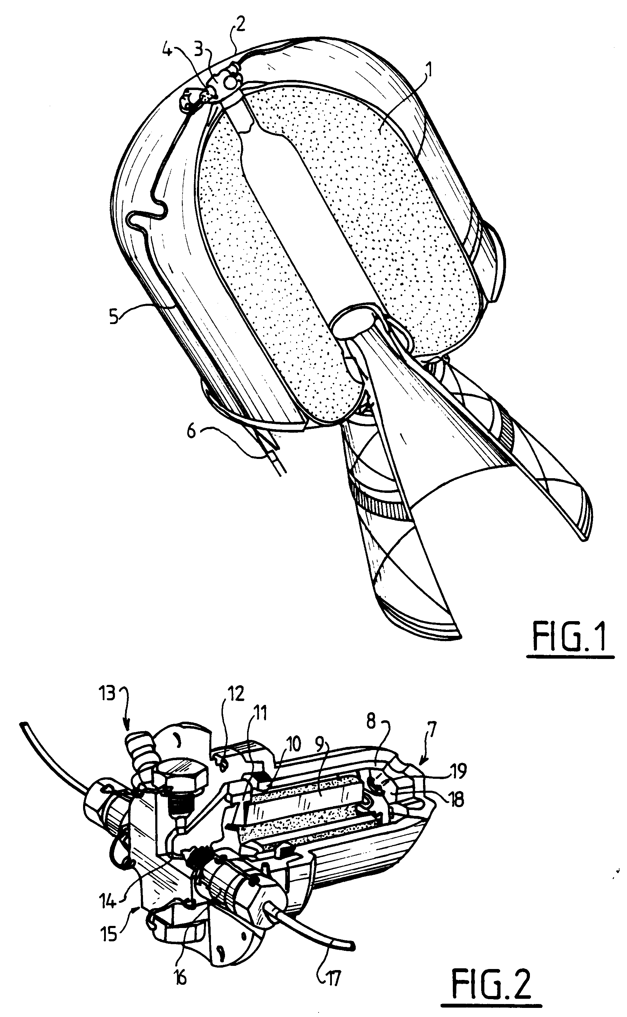

La disposition typique d'un allumeur pyrogène dans un moteur-fusée moderne à propergol solide pour la propulsion de véhicules spatiaux est illustrée à la figure 1, dans laquelle on a désigné par la référence :
- 1, le progergol solide du moteur-fusée ;
- 2, l'armature polaire du dispositif d'allumage ;
- 3, l'allumeur , qui est démontable et monté sur l'extrémité frontale du moteur-fusée ;
- 4, l'amorce fonctionnant par onde de choc ;
- 5, la ligne détonique rigide de transmission ;
- 6, la ligne détonique flexible de transmission.

La structure d'un allumeur pyrogène typique métallique est illustrée à la figure 2, dans laquelle on a désigné par la référence :
- 7, la protection thermique ;
- 8, l'enveloppe métallique de la charge combustible de l'allumeur ;
- 9, la charge combustible pyrogène ;
- 10, l'anneau fileté ;
- 11, la couverture frontale de la charge combustible ;
- 12, le joint d'étanchéité ;
- 13, la valve de pressurisation ;
- 14, la protection thermique de la couverture;
- 15, la couverture ;
- 16, l'amorce fonctionnant par onde de choc ;
- 17, la ligne détonique rigide de transmission ;
- 18, la couverture d'extrémité de la charge combustible ;
- 19, l'entrée de tuyère.

Un allumeur pyrogène consumable est décrit dans le Brevet américain US-A-3 392 673 (KING). Cet allumeur, qui est destiné à un moteur-fusée ayant un propergol solide avec une perforation centrale longitudinale, comprend :
a) une enveloppe tubulaire, comprenant une couche mince de tissu de verre imprégné de résine et une couche externe de renforcement relativement épaisse réalisée en un matériau combustible imprégné d'un agent oxidant, ce dernier permettant la combustion de la couche tubulaire externe de renforcement pendant la combustion du propergol solide précité ;
b) une charge combustible sous forme d'une couche tapissant la surface interne de l'enveloppe tubulaire renforcée évoquée plus haut ;
c) une chambre de combustion délimitée par l'enveloppe ainsi tapissée ;
d) une amorce d'allumage de l'allumeur ;
e) une tuyère d'échappement, dont le diamètre est choisi de façon à maintenir à l'intérieur de la chambre de combustion de l'allumeur la pression désirée, cette tuyère étant réalisée en un matériau résistant à la chaleur et non consumable.

Toutefois, l'allumage de l'enveloppe contenant la charge combustible de l'allumeur n'a lieu qu'après que l'allumeur ait effectué sa fonction, en sorte que la combustion de cette enveloppe ne contribue pas à la puissance utile thermique de l'allumeur, réduisant ainsi le rendement énergétique et contribuant en même temps à l'augmentation du volume et du poids de l'allumeur. De plus, beaucoup de composants sont réalisés en des matériaux organiques générateurs de gaz, dont certains ne sont pas consumables, en sorte que cet allumeur présente des dimensions relativement importantes.

Le Brevet US-A-4,498,292 décrit un allumeur consumable qui comprend une enveloppe ou cavité délimitant une chambre de combustion entre une paroi de fond circulaire et une paroi latérale cylindrique. La paroi de fond est recouverte d'une charge propulsive, alors que la paroi latérale est recouverte d'un élastomère et traversée par des ouvertures formant des tuyères soniques. L'amorce de l'allumeur est constituée par une cartouche formée d'un tube perforé qui est placé au centre de la cavité. Le tube s'étend parallèlement à la paroi de fond de la cavité et prend appui sur la charge propulsive. Un tel allumeur est d'une structure relativement complexe et délicate à mettre en oeuvre.

La présente invention s'est donné pour but de pourvoir à un allumeur consumable pour moteur-fusée à agent propulsif solide qui répond mieux aux exigences de la pratique que les allumeurs du même type antérieurement connus et qui ne présente pas les inconvénients de ceux-ci évoqués plus haut.

La présente invention a pour objet un allumeur consumable, notamment pyrogène, pour un moteur-fusée à propergol solide, comprenant les caractéristiques de la revendication 1.

Selon un mode de réalisation avantageux de l'allumeur conforme à l'invention, l'enveloppe est réalisée sous forme de deux demi-dômes ayant une configuration sensiblement hémisphérique et comportant chacun une extension d'assemblage sous forme de jupe sensiblement cylindrique, lesdites ouvertures traversantes étant ménagées dans les deux jupes d'assemblage.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :
- les figures 1 et 2 illustrent, respectivement, un moteur-fusée à propergol solide pour applications spatiales, équipé d'un allumeur démontable, et un allumeur pyrogène typique métallique, qui ont déjà été décrits plus haut ;
- la figure 3 illustre un moteur-fusée à propergol solide, également du type destiné aux applications spatiales, qui est équipé de l'allumeur consumable conforme à la présente invention, l'allumeur étant fixé au propergol ;
- la figure 4 montre en coupe diamètrale l'allumeur selon l'invention ;
- la figure 5 est une vue en élévation et en coupe partielle de l'allumeur illustré à la figure 4 montrant la disposition des tuyères soniques dont est pourvu l'allumeur ;
- la figure 6 est une vue de détail avec arrachements montrant l'emplacement d'une cartouche d'amorçage d'allumage de l'allumeur selon l'invention contenant une charge pyrotechnique, notamment constituée par des pastilles de BKNO3 et coopérant avec un inflammateur de cette charge, notamment constituée par un cordeau pyrotechnique à combustion rapide, commercialisé par la société américaine McCORMACK SELPH sous le nom de marque de fabrique "HYVELITE" ;
- la figure 7 est la reproduction d'une photographie illustrant en perspective un demi-dôme dont se compose l'allumeur selon l'invention, vu du côté destiné à être assemblé avec un autre demi-dôme, permettant d'apprécier la charge combustible de l'allumeur ainsi que la disposition des demi-tuyères soniques destinées à constituer, avec les demi-tuyères portées par l'autre jupe d'assemblage, les tuyères soniques de l'allumeur ;
- la figure 8 est la reproduction d'une photographie illustrant l'exécution d'un essai en plein air visant à tester le comportement de l'allumeur consumable selon l'invention en conditions ambiantes, après l'avoir fixé à une plaque de propergol à blanc, à son tour fixée à un support (on peu également apprécier la présence d'un dispositif de détonation ainsi que des tuyères soniques) ;
- la figure 9 est la reproduction d'une image d'une reprise cinématographique à haute vitesse montrant l'éjection de gaz très chauds par les tuyères d'échappement soniques (l'adjectif "sonique" exprime essentiellement le fait que l'éjection des gaz atteint la vitesse du son. Les deux endroits diamétralement opposés dans lesquels il n'y a aucune éjection de gaz correspondent aux endroits où ont été disposés les cartouches d'amorçage d'allumage de l'allumeur) ;

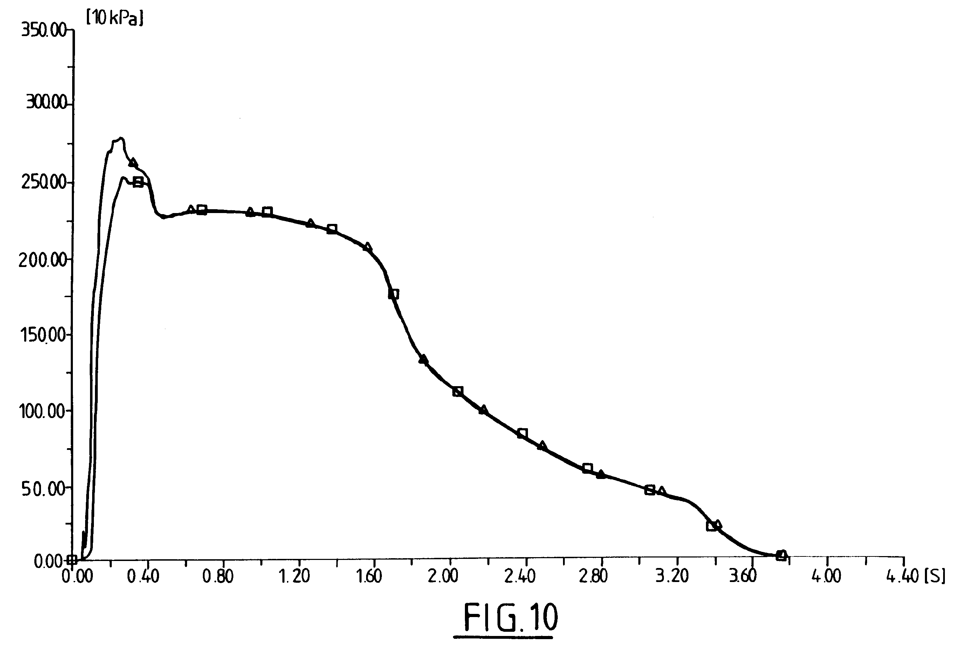

- la figure 10 est un diagramme illustrant l'évolution dans le temps de la pression à l'intérieur de l'allumeur ainsi que dans la cavité du moteur-fusée, telles qu'elles ont été enregistrées pendant un certain nombre d'essais d'allumage de moteurs-fusées équipés de prototypes de l'allumeur selon l'invention ;

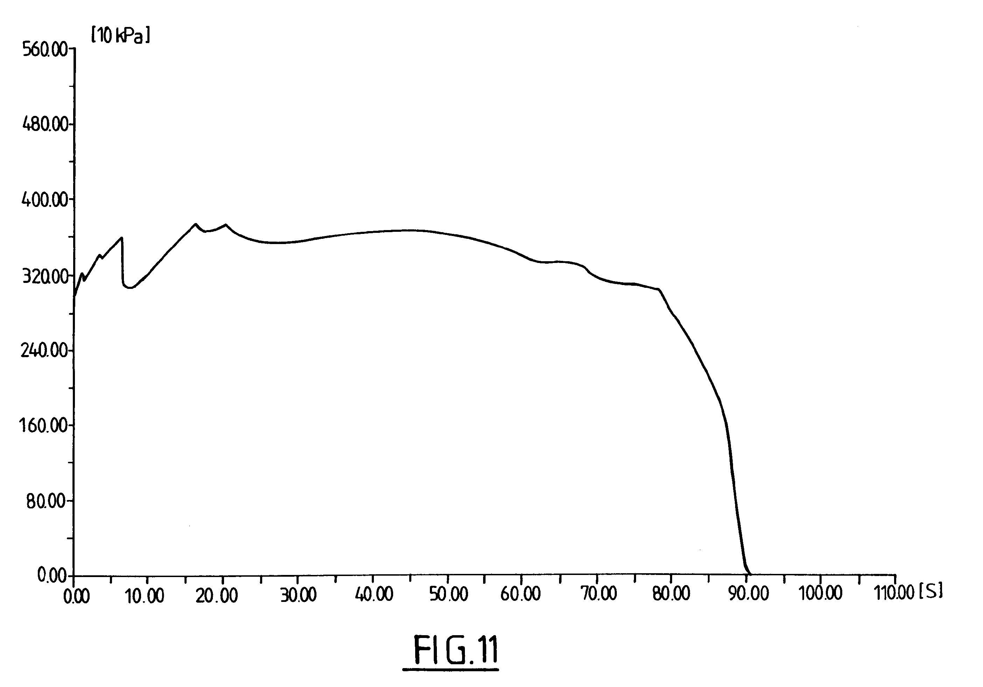

- la figure 11 est un diagramme illustrant l'évolution dans le temps de la pression dans la chambre d'un moteur-fusée pour application spatiale.

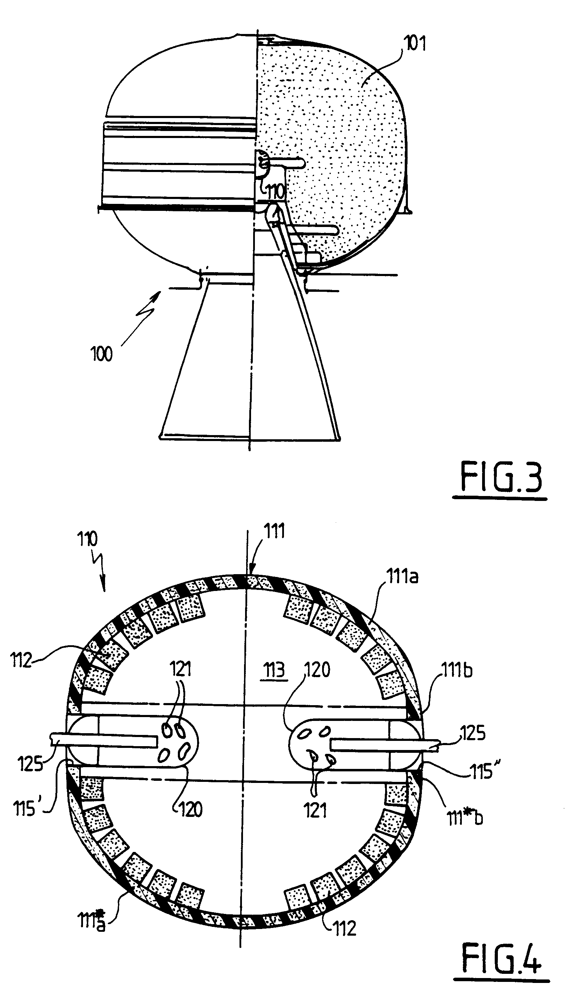

La figure 3 illustre un moteur-fusée 100, destiné à des applications spatiales, qui est équipé de l'allumeur consumable selon l'invention, 110, et du propergol solide 101.

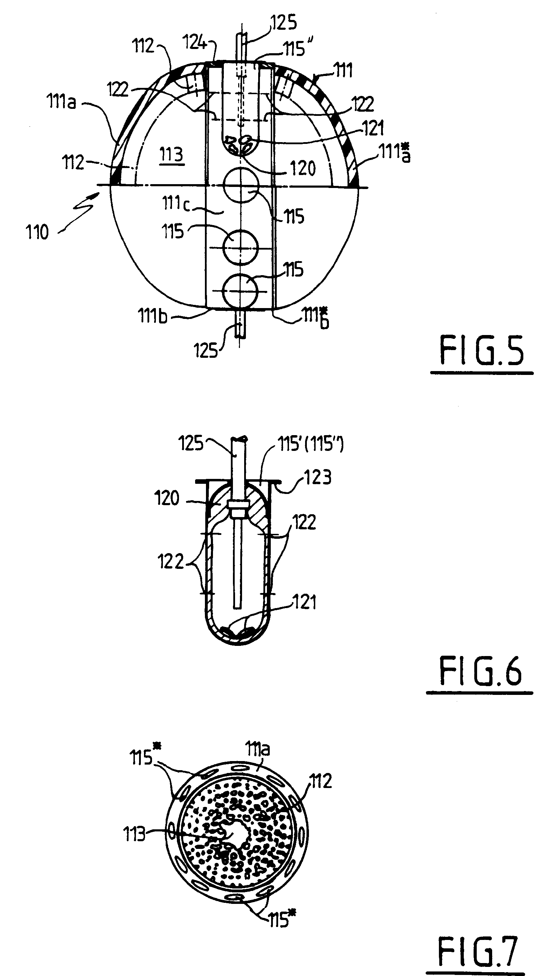

L'allumeur 110 (cf en particulier la figure 4) comporte un enveloppe mince 111 de forme sensiblement sphérique ainsi qu'une charge combustible 112 réalisée sous forme d'une couche tapissant la surface interne de l'enveloppe 111 (qui est aussi combustible) et délimitant une chambre de combustion 113 : de façon plus précise, il s'agit d'un bloc combustible comportant des saillies cylindriques.

Le matériau dans lequel est réalisée l'enveloppe 111 de l'allumeur 110 est un matériau résistant, à savoir capable de supporter la pression et la chaleur développées pendant l'allumage, et ce sur une durée suffisante (il s'agit d'un intervalle de temps très court de l'ordre de 100 à 200 ms), ce matériau étant destiné à être consumé complètement ou réduit en petits fragments souples ou encore à devenir extrêmement souple et flexible immédiatement après l'allumage.

Dans l'application visée par la présente invention, l'enveloppe 111 consiste en deux demi-dômes sensiblement hémisphériques 111a et 111*a pourvus chacun d'une extension d'assemblage sous forme de jupe sensiblement cylindrique 111b et 111*b, respectivement. Bien entendu, la présente invention n'est pas limitée à cette forme des demi-dômes, étant donné que d'autres formes peuvent être également adoptées. Les deux demi-dômes 111a et 111*a sont fabriqués dans des matériaux composites, à savoir des matières plastiques armées de fibres de renforcement, notamment réalisés à partir d'un tissu en fibres de carbone imprégné d'une résine appropriée, et ce contrairement au préjugé technique qui a poussé dans la pratique, jusqu'à maintenant, l'homme du métier à écarter l'emploi des matériaux composites dans ce genre d'applications, en raison du problème technique posé par la nécessité que l'enveloppe de l'allumeur non seulement doit présenter une résistance suffisante pendant l'allumage, mais qu'elle ne doit pas non plus brûler dans l'environnement riche en combustible de la cavité du moteur-fusée. En effet, l'homme du métier a toujours craint qu'un fragment partiellement fondu de la matière plastique, dont se composent les matériaux composites dans lesquels pourrait être réalisée l'enveloppe d'un allumeur, puisse entraîner le blocage temporaire de la (ou des) tuyères d'échappement (qui seront décrites plus loin) et, par conséquent, une panne du moteur-fusée. Bien entendu, il est possible d'utiliser comme armature de renforcement un tissu en toutes autres fibres pour fabriquer l'enveloppe de l'allumeur 110, pourvu qu'il soit capable de résister à la chaleur développée pendant l'allumage, et ce pendant un temps suffisamment long. Dans la présente invention on a utilisé comme matrice une résine époxy, bien que beaucoup d'autres résines se prêtent à être employées.

La forme particulière de la couche de charge combustible 112 est fonction de l'évolution requise pour la pression d'allumage.

En ce qui concerne cette charge combustible, celle-ci peut être constituée par toute composition appropriée capable de produire la combustion à la vitesse souhaitée et des gaz d'allumage très chauds. En outre, la charge combustible 112 peut être moulée directement dans les demi-dômes 111a et 111*a ou préfabriquée et montée ensuite dans les demi-dômes ou encore disposée dans les demi-dômes pour être usinée à la forme voulue. La charge 112 de l'allumeur protège la partie interne de son enveloppe 111 de l'action des produits de combustion chauds qui se produisent pendant l'allumage, et ce jusqu'à la fin du processus de combustion de l'allumeur.

Après avoir recouvert la partie interne des deux demi-dômes avec le propergol solide, ces deux demi-dômes sont assemblés entre eux en rapprochant leurs jupes cylindriques d'assemblage 111b et 111*b, de façon à établir une liaison étanche entre les deux demi-dômes. Cet assemblage exige que les deux demi-dômes 111a et 111*a soient fabriqués avec un degré de précision élevé, sous peine de ne pas réaliser une liaison efficace entre eux et que des fuites indésirées se manifestent.

Les jupes cylindriques 111b et 111*b des deux demi-dômes 111a et 111*a contiennent plusieurs évidements 115* (cf en particulier la figure 7), fabriqués avec précision, qui se correspondent deux à deux en sorte que, lors de l'assemblage des deux demi-dômes, chaque paire d'évidements définit une ouverture traversante 115. Un certain nombre de ces ouvertures 115, régulièrement espacées entre elles, est visible à la figure 5. Deux de ces ouvertures, 115′ et 115˝, respectivement (cf la figure 4), sont utilisées pour y monter des dispositifs d'amorçage (ou amorces) d'allumage de l'allumeur 110, qui sont réalisés sous forme de cartouches 120 (cf aussi la figure 6) contenant une charge 121 destinée à enflammer la charge combustible 112 de l'allumeur 110. Les autres ouvertures, 115, sont utilisées comme tuyères soniques. Le caractère sonique de ces tuyères permet de séparer (au moins initialement) le processus de combustion de l'allumeur du processus de combustion du moteur-fusée 100. Le nombre d'ouverture 115 et leurs dimensions sont fonction de la particulière application visée. Avant l'allumage, les tuyères soniques 115 peuvent être recouvertes par une membrane (non illustrée dans les dessins) pour faciliter l'établissement de la pression souhaitée, tout en évitant la pénétration de l'humidité, bien que cette disposition ne soit pas toujours nécessaire.

Le mélange pyrotechnique 121 contenu dans les cartouches 120 est inflammable et peut être constitué par des pastilles de BKNO3, un propergol solide pulvérulent, des copeaux de propergol solide ou d'autres mélanges appropriés. Les cartouches 120 sont de forme sensiblement cylindrique et font saillie vers le centre de la chambre 113 de l'allumeur 110. Ces cartouches comportent chacune de petites ouvertures 122 (cf la figure 6) pour permettre l'allumage de la charge combustible 112 de l'allumeur. Les cartouches peuvent être fabriqués en un métal facilement combustible, tel que l'aluminium ou le magnésium, ou en des matériaux composites ou en tout autre matériau approprié.

En outre, ces cartouches sont reliées aux jupes d'assemblage cylindriques 111b et 111*b de l'enveloppe 111 de l'allumeur 110 par l'intermédiaire d'une collerette 123 (cf la figure 6). La charge ou le mélange pyrotechnique 121 dans les cartouches 120 peut être allumé par une amorce (inflammateur) activée électriquement, tel que le détonateur standard mis au point par la NASA ou des amorces analogues ou encore par une ligne détonique de transmission, tel qu'un cordeau "HYVELITE" 125 du type déjà évoqué plus haut (cf la figure 6), ou tout autre moyen de transmission pyrotechnique. Bien que dans la présente invention on utilise deux cartouches 120 métalliques, notamment en aluminium, remplies de pastilles de BKNO3 (elles sont disposées en deux positions diamétralement opposées dans la zone 111c, sensiblement cylindrique, de l'allumeur 110 : cf en particulier la figure 5, où la référence 124 désigne un isolant thermique), il est toutefois possible d'utiliser une seule cartouche ou plus de deux cartouches. Bien entendu, la construction de ces cartouches n'est pas forcément limitée à l'emploi de l'aluminium et le mélange pyrotechnique 121 peut être constitué par toute composition appropriée, comme déjà précisé plus haut.

Après avoir assemblé l'allumeur, celui-ci est collé au bloc de poudre propulsive (propergol) du moteur-fusée 100.

L'allumeur selon l'invention peut être placé à l'endroit le plus approprié dans le moteur-fusée 100. En outre, il est possible d'utiliser une pluralité d'allumeurs pour allumer le moteur-fusée 100, en fonction des besoins. Après avoir allumé le mélange pyrotechnique 121, qui se trouve dans les cartouches 120 précitées, par tout moyen classique (amorce activée électriquement, cordeau flexible, ligne détonique de transmission, amorce fonctionnant par onde de choc, etc), la charge combustible 112 qui est à l'intérieur de l'enveloppe 111 de l'allumeur 110 s'allume à cause de la présence des produits de combustion chauds en provenance du mélange pyrotechnique 121. Une pression s'établit alors dans la chambre de combustion 113 délimitée par l'enveloppe 111 tapissée par la charge 112, en raison de la combustion de cette charge. Si la membrane qui a été évoquée plus haut est présente, celle-ci se déchire lorsque la pression et la chaleur ont atteint des valeurs suffisamment élevées. L'ouverture des tuyères 115 provoque alors l'écoulement des produits de combustion chauds le long de ces tuyères, ce qui permet d'allumer le propergol 101 du moteur-fusée 100.

Ce processus s'accomplit dans un temps inférieur à 200 ms, à partir du moment de l'amorçage de l'allumage jusqu'au moment où dans le moteur-fusée 100 est atteint le 90 % de sa pression initiale maximale.

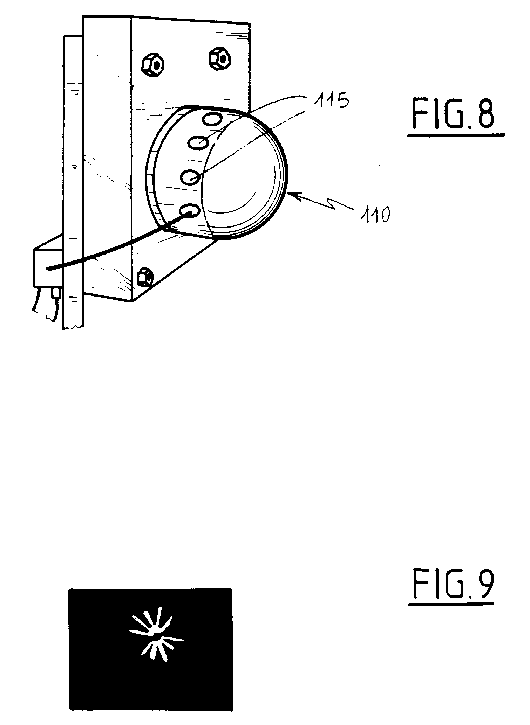

L'allumeur consumable selon l'invention a fait l'objet d'essais en plein air visant à tester son comportement en conditions ambiantes. A cet effet, des prototypes de l'allumeur conforme aux dispositions qui précèdent ont été reliés à une plaque de propergol à blanc (cf les figures 8 et 9).

Ensuite, les prototypes d'allumeurs ont été soumis à tous les tests auxquels sont soumis normalement les allumeurs destinés aux applications spatiales, à savoir aux tests de vibrations et de cycles thermiques.

En outre, ces prototypes ont supporté avec succès les tests d'étanchéité et de combustion.

De plus, des prototypes d'allumeurs ont été utilisés avec succès pous allumer un certain nombre de moteurs-fusées du type utilisé dans ce genre d'essais.

La figure 8 illustre, sous forme de diagrammes, l'enregistrement de l'évolution de la pression à l'intérieur de l'allumeur ainsi que dans la chambre du moteur-fusée (les points des diagrammes se rapportant à l'évolution de la pression à l'intérieur du moteur-fusée sont entourés par des petits rectangles, alors que les points du diagramme ayant trait à l'évolution de la pression à l'intérieur de l'allumeur sont entourés par des petits triangles).

A la fin de ces tests, on a pu vérifier que l'allumeur était complètement consumé et qu'il n'avait pas endommagé les parties du moteur-fusée. Les temps d'allumage ont été de l'ordre de 150 ms.

Enfin, un prototype de l'allumeur selon l'invention a été utilisé pour allumer un moteur-fusée à propergol solide du type identique aux moteurs destinés aux applications spatiales, exception faite en ce qui concerne l'enveloppe de ce moteur-fusée qui était métallique. Ce moteur-fusée, qui contenait 1598,6 kg de propergol solide, a fourni une poussée moyenne de 37 kN et une poussée maximale de 44,7 kN. La pression maximale à l'intérieur du moteur-fusée a été de 4,03 MPa, alors que la pression moyenne a été de 3,283 MPa. L'allumage fut parfait, avec un temps d'allumage de 66 ms, valeur qui est bien au-dessous de la valeur maximale admissible de 200 ms. Un diagramme correspondant à l'enregistrement de l'évolution de la pression à l'intérieur du moteur-fusée à propergol solide utilisé dans ce dernier test est illustré à la figure 9.

## Revendications

1. Allumeur consumable pour moteur-fusée à agent propulsif solide, du type comprenant :
- une enveloppe (111) mince et renforcée délimitant une chambre de combustion (113),
- une charge propulsive (112) sous la forme d'une couche tapissant la surface interne de l'enveloppe,
- au moins une amorce d'allumage (120) sous la forme d'une cartouche et contenant une charge (121) pour enflammer ladite charge propulsive (112) de l'enveloppe (111),
- un inflammateur (125) de mise à feu de l'amorce d'allumage (120), et
- une pluralité de tuyères soniques, constituées par des ouvertures traversantes (115) percées dans l'enveloppe et sa couche de charge propulsive (112),
caractérisé en ce que ladite enveloppe (111) est de forme sphérique et réalisée en un matériau composite, et en ce que ladite amorce d'allumage (120) est montée dans l'une desdites ouvertures traversantes (115) ménagées de façon uniforme suivant une circonférence de l'enveloppe (111) et fait saillie radialement vers le centre de la chambre de combustion (113).

2. Allumeur selon la revendication 1, caractérisé en ce que l'enveloppe (111) est constituée de deux demi-dômes (111a,111*a) ayant chacun une forme sensiblement hémisphérique, chaque demi-dôme se prolongeant par une jupe cylindrique (111b,111*b), lesdites jupes s'emboîtant l'une dans l'autre.

3. Allumeur selon la revendication 2, caractérisé en ce que lesdites ouvertures traversantes (115) sont percées dans lesdites jupes (111b,111*b).

4. Allumeur selon la revendication 3, caractérisé en ce que lesdites ouvertures traversantes (115) sont régulièrement réparties autour de la circonférence formée par lesdites jupes (111b,111*b).

5. Allumeur selon la revendication 3 ou 4, caractérisé en ce que les ouvertures traversantes (115) sont recouvertes d'une membrane.

6. Allumeur selon l'une quelconque des revendications 1 à 5, caractérisé en ce que deux amorces d'allumage (120) sont montées dans deux ouvertures traversantes (115) diamétralement opposées.

7. Allumeur selon l'une quelconque des revendications 1 à 5, caractérisé en ce qu'il comprend plusieurs amorces d'allumage (120), chaque amorce (120) étant montée dans une ouverture traversante (115).

8. Allumeur selon l'une quelconque des revendications précédentes, caractérisé en ce que l'enveloppe (111) est constituée en un matériau composite à base d'un tissu en fibres de carbone.

## Patentansprüche

1. Brennbarer Zünder für einen Raketenmotor mit festem Treibstoff
- mit einem dünnen und verstärkten Gehäuse (111), welches eine Verbrennungskammer (113) begrenzt,
- mit einer Treibladung (112) in Gestalt einer Schicht, die die Innenfläche des Gehäuses auskleidet,
- mit mindestens einer Zündeinrichtung (120) in Gestalt einer Kartusche, die eine Befüllung (121) zum Entflammen der besagten Treibladung (112) des Gehäuses (111) enthält,
- mit einem Zünder (125) zum Zünden der Zündeinrichtung (120), und
- mit einer Vielzahl von Schalldüsen, die aus quer durchlaufenden Öffnungen (115) bestehen, die durch das Gehäuse und die Treibladungsschicht (112) hindurch gestoßen sind,
**dadurch gekennzeichnet**, daß das Gehäuse (111) kugelförmig ist und aus einem Verbundwerkstoff besteht und daß die besagte Zündeinrichtung (120) in eine der genannten quer durchlaufenden Öffnungen (115) eingesetzt ist, die in regelmäßiger Weise entlang einem Umfangkreis des Gehäuses (111) eingebracht sind, und einen Vorsprung bildet, der radial in Richtung des Zentrums der Verbrennungskammer (113) hin ausgerichtet ist.

2. Zünder nach Anspruch 1, dadurch gekennzeichnet, daß das Gehäuse (111) aus zwei hälftigen Schalen (111a, 111*a) besteht, die eine im wesentlichen halbkugelförmige Gestalt aufweisen, und daß jede Schale über eine zylindrische Schürze (111b,111*b) verlängert ist, wobei diese Schürzen ineinander einschiebbar sind.

3. Zünder nach Anspruch 2, dadurch gekennzeichnet, daß die besagten quer durchlaufenden Öffnungen (115) in und durch die Schürzen (111b,111*b) hindurchgestoßen sind.

4. Zünder nach Anspruch 3, dadurch gekennzeichnet, daß die besagten quer durchlaufenden Offnungen (115) in gleichmäßigen Abständen entlang dem durch die Schürzen (111b,111*b) gebildeten Umkreis angeordnet sind.

5. Zünder nach Anspruch 3 oder nach Anspruch 4, dadurch gekennzeichnet, daß die quer durchlaufenden Öffnungen (115) von einer Membran abgedeckt sind.

6. Zünder nach einem der vorstehenden Ansprüche 1 bis 5, dadurch gekennzeichnet, daß zwei Zündeinrichtungen (120) in zwei einander diametral gegenüberliegenden quer durchlaufenden Öffnungen (115) angeordnet sind.

7. Zünder nach einem der vorstehenden Ansprüche 1 bis 5, dadurch gekennzeichnet, daß mehrere Zündeinrichtungen (120) vorgesehen sind, wobei jede Zündeinrichtung (120) in jeweils einer quer durchlaufenden Öffnung (115) angeordnet ist.

8. Zünder nach einem der vorstehenden Ansprüche, dadurch gekennzeichnet, daß das Gehäuse (111) aus einem Verbundwerkstoff auf der Basis eines Gewebes aus Karbonfasern hergestellt ist.

## Claims

1. Consumable igniter for a solid-propellant rocket motor, of the type comprising:
- a thin and reinforced casing (111) delimiting a combustion chamber (113),
- a propellant charge (112) in the form of a layer lining the internal surface of the casing,
- at least one initiator (120) in the form of a cartridge and containing a charge (121) to ignite said propellant charge (112) of the casing (111),
- an ignition device (125) for firing the initiator (120), and
- a plurality of sonic apertures, constituted by through openings (115) formed in the casing and its propellant charge layer (112),
characterized in that said casing (111) is of spherical shape and formed of a composite material, and in that said initiator (120) is mounted in one of said through openings (115) provided in uniform manner along a circumference of the casing (111) and projects radially towards the centre of the combustion chamber (113).

2. Igniter according to Claim 1, characterized in that the casing (111) is constituted by two half-domes (111a,111*a), each having a substantially hemispherical shape, each half-dome being extended by a cylindrical skirt (111b,111*b), said skirts fitting into one another.

3. Igniter according to Claim 2, characterized in that said through openings (115) are formed in said skirts (111b,111*b).

4. Igniter according to Claim 3, characterized in that said through openings (115) are regularly distributed about the circumference formed by said skirts (111b, 111*b).

5. Igniter according to Claim 3 or 4, characterized in that the through openings (115) are covered by a membrane.

6. Igniter according to any one of Claims 1 to 5, characterized in that two initiators (120) are mounted in two diametrically opposite through openings (115).

7. Igniter according to any one of Claims 1 to 5, characterized in that it comprises a plurality of initiators (120), each initiator (120) being mounted in a through opening (115).

8. Igniter according to any one of the preceding claims, characterized in that the casing (111) is formed of a composite material based on a carbon fibre fabric.
